# EUROPEAN PATENT APPLICATION

(11) **EP 4 600 250 A1**
(43) Date of publication of application: **13.08.2025**
(21) Application number: 24156111.7
(22) Date of filing: 06.02.2024
(51) Int. Cl.: C07F 9/32, C08K 5/00, C08K 5/5313, C09K 21/12

(54) **TRIPHOSPHINATE COMPOUND SUITABLE FOR POLYMERIC FLAME RETARDANT APPLICATIONS AND PREPARATION METHOD THEREOF**

(71) Applicant: Clariant International Ltd, 4132 Muttenz (CH)
(72) Inventor: CLAUSEN, Florian, 50354 Hürth (DE); NADKARNI, Dwayaja, 50354 Hürth (DE); HAUENSTEIN, Oliver, 50354 Hürth (DE)
(74) Representative: Clariant Produkte (Deutschland) GmbH

(57) **Abstract**

A triphosphinate compound of formula (III)

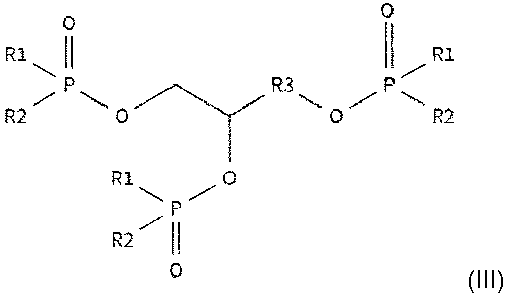

Wherein R1 and R2 are the same or different and independently represent H or a C₁-C₁₀ alkyl, with the proviso that R1 and R2 may not each be H simultaneously, and wherein R3 is a C₁-C₈ alkylenyl group which is optionally substituted with a heteroatom selected from O, N and S. Said triphosphinate may be obtained from a reaction of at least one phosphinic acid with an triol, and is found to be particularly suitable to use as a flame retardant for polymer and polymer foam material.

## Description

The present invention relates to a particular type of triphosphinate, which is obtainable or obtained by reacting at least a phosphinic acid with a triol. The present invention also relates to a process for manufacturing said triphosphinate, or a composition comprising thereof, which comprises reacting at least a phosphinic acid with a triol. Furthermore, the present invention encompasses the application of the triphosphinate, or a phosphinate composition containing the same, as a flame retardant for polymers and polymer foams.

It is known that the flame retardancy of polymers and polymer foams can be achieved by addition of various substances. Most of these flame retardant substances are halogenated, especially brominated organic compounds. Another commonly used halogenated flame retardant is TCPP (tris (1-chloro-2-propyl) phosphate), which is often incorporated in polyurethane foam in consumer products and in home insulation, as well as in electronics. However, despite providing an effective flame retardancy, TCPP within the polymer foam could escape over time into the environment, causing negative toxicological and ecotoxicological impacts. In addition, leaching of the TCPP flame retardant causes the overall flame retardant effectiveness to diminish over time. Therefore, continuous effects have been made to find alternative non-halogenated and stable flame retardants for polymers and polymer foams.

One class of such non-halogenated flame retardants for polymer or foam uses are phosphorus based. Judging by their phosphorous-oxidation state, these phosphorus-based flame retardants may be phosphates, phosphonates or phosphinates, each containing phosphorus-oxygen-carbon bonds, i.e. ester linkages.

US 4 458 035 describes oligomeric phosphate flame retardant for polyurethane foams, and said phosphate is of the formula (1) below in which
- n: is 0 to 10,
- R: is an C₁-C₁₀ (halo)alkyl radical and
- R₁ and R₂: are hydrogen atoms or C₁-C₁₀ (halo)alkyl radicals.

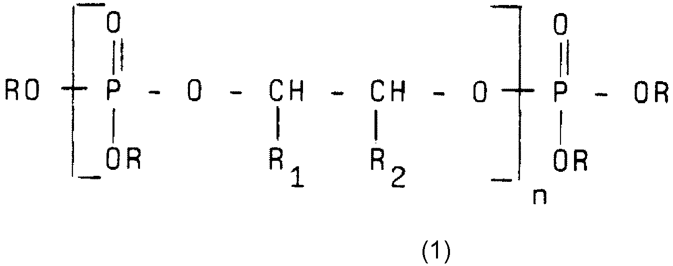

EP 0 658 580 describes a different type of reactive phosphate flame retardant used for polyurethane, and said reactive flame retardant is of the formula (2) below 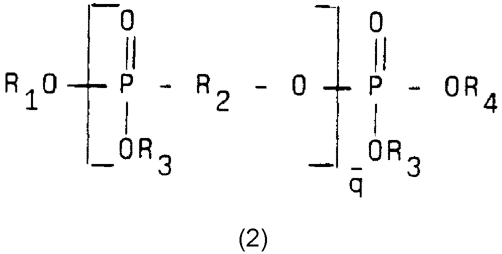 in which
- q: denotes an average chain length of 0.5 to 10,
- R₁: denotes a specific hydroxyl-containing radical of the formula (2-a) where R₇ is H,
- R₂: is a radical of the formula (2-b) 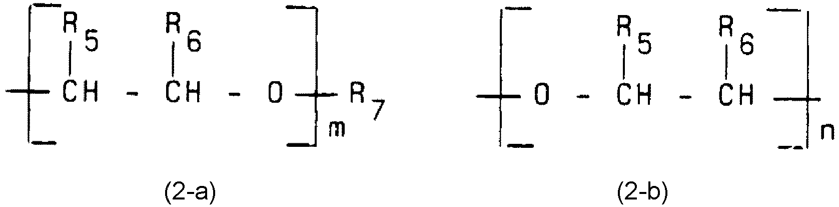
- R₃: is a radical of the formula (2-a)
where R₇ is C₁-C₆, R₄ is R₁ or R₃; R₅, R₆ and R₇ are an H atom or an alkyl radical having 1 to 6 carbon atoms,
- m: is 0 to 4 and
- n: is 1 to 4.

US 7 288 577 describes blends of two different phosphate flame retardants for polyurethane, consisting essentially of:
(a) 50 percent by weight, of the blend, of butylated triphenyl phosphate and
(b) 50 percent by weight, of the blend, of poly(ethylethyleneoxy) phosphate.

WO 2014 206487 A1 describes aromatic phosphonate flame retardant compounds for cured epoxy resin compositions, and such resin compositions can be used as an adhesive, for manufacturing of electronic circuit components, or for making structural elements for the transportation and building industry. According to WO 2014 206487 A1, said phosphonate flame retardant compounds could be a phosphonate ester with hydroxyalkyl groups.

Although the foregoing patent disclosures may have mentioned some efficient and well used reactive phosphorus-based flame retardants, their inherent phosphorus-oxygen-carbon bonds (i.e. ester linkages) could be prone to hydrolysis under humid condition, which in turn leads to adverse influences on polymerization process or final polymer properties. Particularly, it is known that hydrolytically formed acid could deactivate polymerization catalyst during foaming process, and further cleave the covalent bonds in the polymer foam product, thereby destroying the intended 3-D foam network.

Moreover, to meet the industrial requirements for polymer manufacturing process, reactive flame retardants need to be compatible with the monomer reactant(s) and, as a preferred feature, may be stably stored with at least one monomer reactant on the shelf or in transportation. Such compatibility requirements have eliminated the feasibility of many reactive phosphorous flame retardants for polymer, which are otherwise very effective in flame retardancy.

Another important parameter to consider for flame retardants in polymer application is their emission property. For instance, one major application for flame-retardant flexible polyurethane foams is seat liners or head liners in the automotive sector, which demands a very low quantity of semi-volatile condensable emissions (FOG) and minimized volatile organic components (VOC) in the user environment.

It is therefore an object of the present invention to provide halogen-free, phosphorus-based flame retardants which exhibit hydrolytic stability in humid condition, can be used to prepare effective flame-retardant polymers or flame-retardant polymer compositions with low FOG/VOC emission and without reactant compatibility issues.

Another object of the present invention is the provision of a flame-retardant polymer or polymer composition which combines excellent flame retardancy, very low FOG/VOC emission, and hydrolytic stability at elevated temperatures.

These objects are achieved by exploiting the flame retardant uses of a triphosphinate compound of formula (III) 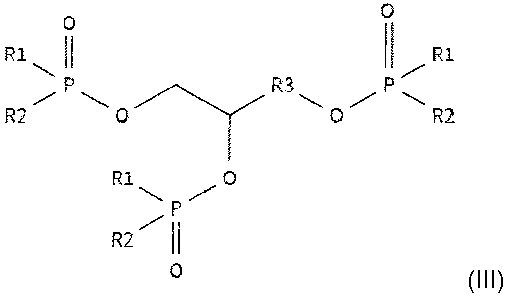 wherein
R1 and R2 are the same or different and independently represent H or a C₁-C₁₀ alkyl, with the proviso that R1 and R2 may not each be H simultaneously, and wherein
R3 is a C₁-C₈ alkylenyl group which is optionally substituted with a heteroatom selected from O, N and S.

In the context of the present invention, the term "triphosphinate" refers to a chemical compound or moiety that contains three phosphinate groups, each consisting of a pentavalent phosphorus atom that forms a double bond to an oxygen atom (=O), a single bond to an oxy group (-O-), and additional bonds to either two organic substituents or one organic substituent and one hydrogen atom.

Preferably, R1 and R2 are each independently selected from C₁-C₆ alkyl, more preferably selected from C₁-C₄ alkyl. In one particularly preferred embodiment, R1 and R2 are both ethyl. In another particularly preferred embodiment, one of R1 and R2 is ethyl and the other is methyl.

Unless otherwise indicated, the term "alkylenyl" refers to a divalent analog of a linear or branched alkyl group, which may be optionally substituted with a heteroatom selected from O, N and S.

Preferably, R3 is selected from the group consisting of unsubstituted alkylenyl groups and oxyalkylenyl groups. Suitable examples of unsubstituted alkylenyl groups include methylene, and suitable examples of oxyalkylenyl groups include oxyethylene (-O-CH₂-CH₂-) and oxypropylene (-O-CH₂-CH(CH₃)-).

The triphosphinate of formula (III) can be used as flame retardant and can function as effective flame retardant for polymers and polymer foams.

The present invention also provides a novel process for the preparation of said triphosphinate, the process comprising the reaction of at least one phosphinic acid of formula (I) with a triol of formula (II): 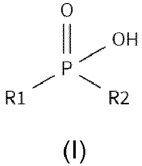 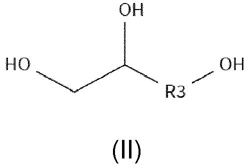 wherein R1-R3 are as above defined.

The triphosphinate compound of formula (III) can be isolated from the reaction product mixture using separation techniques for individual phosphinate compounds, such as preparative column chromatography.

The present invention also relates to a flame retardant composition comprising 10 wt% to 98 wt%, preferably 10 wt% to 65 wt% of a triphosphinate compound of formula (III), the percentage being based on the total weight of the composition. Said flame retardant composition may be obtained by the reaction of at least one phosphinic acid of formula (I) with a triol of formula (II) as described above.

The flame retardant composition of the present invention may further comprise at least one phosphinate compound selected from compounds of formulae (IA), (IB), (IIA), and (IIB): 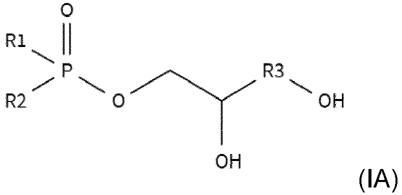 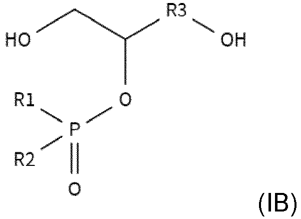 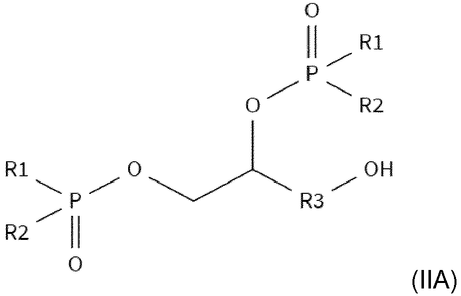 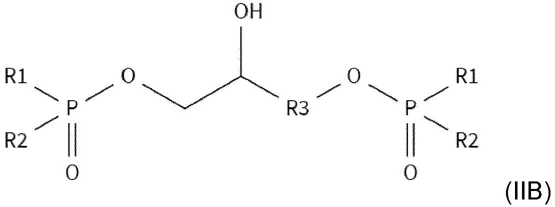 wherein R1-R3 are as above defined.

In a specific embodiment of said flame retardant composition, the phosphinate compounds of formulae (IA) and (IB) are each present in an amount ranging from 10 wt% to 60 wt%, the phosphinate compounds of formulae (IIA) and (IIB) are each present in an amount ranging from 10 wt% to 60 wt%, and a triphosphinate compound of formula (III) is present in an amount ranging from 10 wt% to 65 wt%, all weight percentages being based on the total weight of the composition.

In a particularly preferred embodiment of said flame retardant composition, R1 and R2 are both ethyl, and R3 is methylene. In another particularly preferred embodiment of said flame retardant composition, one of R1 and R2 is ethyl and the other is methyl, and R3 is methylene.

The composition of phosphinates according to the present invention can also be used as reactive and/or additive flame retardant as a whole and may function as reactive flame retardant for polymers and polymer foams, by providing individual phosphinate which can be reacted with the monomers in the polymerization or foaming process.

The reaction of at least one phosphinic acid of formula (I) with a triol of formula (II) as aforementioned for the preparation of the triphosphinate of formula (III) or the flame retardant composition of phosphinates according to the present invention may be carried out at a temperature from 0°C up to the boiling point of the reaction mixture, preferably from 20°C to 200°C, particularly preferably from room temperature to 200°C.

According to the present invention, the molar ratio of the phosphinic acid of formula (I) and the triol of formula (II) in the reaction to obtain the triphosphinate of formula (III) or the flame retardant composition of phosphinates is preferably from 5:1 to 1:5, preferably from 3:1 to 1:2.

The present invention also provides a flame-retardant polymer obtained by reacting monomers and at least one triphosphinate of formula (III) or a flame retardant composition of phosphinates according to the present invention, under polymerization conditions.

Said flame-retardant polymer may be duroplastics selected from the group consisting of polyurethanes, epoxy resins, phenol-formaldehyde resins, melamine-formaldehyde resins, urea-formaldehyde resins and unsaturated polyesters.

Preferably, the flame-retardant polymer is a flame-retardant polyurethane (PUR), obtained by reacting a polyol and an isocyanate in the presence of either at least one triphosphinate of formula (III) or a flame retardant composition of phosphinates according to the present invention, optionally in the presence of a polymerization catalyst.

Suitable polymerization catalysts for the production of the flame-retardant polyurethane may be selected from aliphatic tertiary amines (for example, triethylamine, tetramethylbutanediamine), cycloaliphatic tertiary amines (for example, 1,4-diaza(2,2,2)bicyclooctane), aliphatic aminoethers (for example, dimethylaminoethyl ether and N,N,N-trimethyl-N-hydroxyethyl-bisaminoethyl ether), cycloaliphatic aminoethers (e.g. N-ethylmorpholine), aliphatic amidines, cycloaliphatic amidines, urea, derivatives of urea (such as aminoalkyl ureas, see for example EP-A 0 176 013, in particular (3-dimethylaminopropylamine) urea), and tin catalysts (such as dibutyltin oxide, dibutyltin dilaurate, tin octoate).

Advantageously, the invented triphosphinate of formula (III) and the flame retardant composition of phosphinates are each highly compatible with the polyols for the production of the flame-retardant polyurethane. Notably, both the invented triphosphinate of formula (III) and the aforementioned flame retardant composition of phosphinates could easily dissolve in polyols to form a homogenous solution, which may be stably stored up to months on the shelf or in transportation. Said homogenous solution as starting material for polymerization is also beneficial for providing the end PUR product with a uniformly distributed flame retardancy.

For the purpose of the present invention, the term "polyol" refers to compounds having at least two hydrogen atoms capable of reaction with isocyanates. These are compounds having amino groups, thio groups or carboxyl groups, and preferably compounds having hydroxyl groups, in particular from 2 to 8 hydroxyl groups.

Suitable polyols for the purpose of the present invention include those having a molecular weight of from 400 to 10,000, specifically those of molecular weight from 1000 to 6000, preferably from 2000 to 6000, and are generally polyethers or polyesters dihydric to octahydric, preferably dihydric to hexahydric, or else polycarbonates or polyesteramides, as known per se for the production of homogenous or of cellular polyurethanes, and as described in DE-A 28 32 253, for example.

Preferred polyester polyols are obtained by polycondensation of a polyalcohol such as ethylene glycol, diethylene glycol, propylene glycol, 1,4-butanediol, 1,5-pentanediol, methylpentanediol, 1,6-hexanediol, trimethylolpropane, glycerol, pentaerythritol, diglycerol, glucose and/or sorbitol, with a dibasic acid such as oxalic acid, malonic acid, succinic acid, tartaric acid, adipic acid, sebacic acid, maleic acid, fumaric acid, phthalic acid and/or terephthalic acid. These polyester polyols can be used alone or in combination.

For production of thermoset flame-retardant polyurethane, a further preferred group of polyester polyols are those with two, three or four hydroxyl groups, including ethylene glycol, propylene glycol, trimethylolpropane and pentaerythritol.

Preferred polyether polyols include, but are unlimited to, triols such as glycerol, trimethylolethane (i.e., 1,1,1-tris(hydroxymethyl)ethane), and trimethylolpropane (i.e., 1,1,1-tris(hydroxymethyl)propane); tetraols such as pentaerythritol; pentaols such as glucose; hexaols such as dipentaerythritol and sorbitol; or alkoxylated derivatives of all the above polyalcohols, such as preferably, ethoxylated and propoxylated derivatives thereof.

A particularly preferred polyether polyol is a polyoxypropylene triol.

Other suitable polyols for the purpose of the present invention include those having a low molecular weight from 30 to 400, which are preferably compounds having hydroxyl groups and/or amino groups and serving as chain extenders or crosslinkers. These compounds generally have from 2 to 8, preferably from 2 to 4, hydrogen atoms capable of reaction with isocyanates.

Suitable isocyanate used for producing the flame-retardant polyurethane of the present invention may be selected from, e.g., aliphatic, cycloaliphatic, araliphatic, aromatic or heterocyclic polyisocyanates (see, for example, W. Siefken in Justus Liebigs Annalen der Chemie, 562, pp. 75-136), for example those of the formula Q(NCO)ᵣ, where r is from 2 to 4, preferably from 2 to 3, and Q is an aliphatic hydrocarbyl radical having from 2 to 18 carbon atoms, preferably from 6 to 10 carbon atoms, a cycloaliphatic hydrocarbyl radical having from 4 to 15 carbon atoms, preferably from 5 to 10 carbon atoms, an aromatic hydrocarbyl radical having from 6 to 15 carbon atoms, preferably from 6 to 13 carbon atoms, or an araliphatic hydrocarbyl radical having from 8 to 15 carbon atoms, preferably from 8 to 13 carbon atoms.

Suitable polyisocyanates for the purpose of the invention are aromatic, alicyclic and/or aliphatic polyisocyanates having at least two isocyanate groups and mixtures thereof. Preference is given to aromatic polyisocyanates such as tolyl diisocyanate, methylene diphenyl diisocyanate, naphthylene diisocyanate, xylylene diisocyanate, tris(4-isocyanatophenyl)methane and polymethylene-polyphenylene diisocyanates; alicyclic polyisocyanates such as methylenediphenyl diisocyanate, tolyl diisocyanate; aliphatic polyisocyanates and hexamethylene diisocyanate, isophorone diisocyanate, dimeryl diisocyanate, 1,1-methylenebis(4-isocyanatocyclohexane-4,4'-diisocyanatodicyclohexylmet hane isomer mixture, 1,4-cyclohexyl diisocyanate, and lysine diisocyanate and mixtures thereof.

Particular preference is generally given to the polyisocyanates readily available in industry, such as 2,4- and 2,6-toluene diisocyanate.

For the purpose of the present invention, the flame-retardant polyurethanes may be linear PUR, e.g., produced by diols and diisocyanates, or crosslinked PURs, e.g. produced by converting triisocyanate diisocyanate mixtures with triol-diol mixtures. The properties of flame-retardant polyurethanes can be varied in a wide range. Depending on the degree of crosslinking and/or isocyanate or OH component used, thermosets, thermoplastics or elastomers are obtained.

The flame-retardant polyurethanes of the present invention may be used as soft or hard foam, or alternatively as molding compounds for molding, as casting resins (isocyanat resins), as (textile) elastic fibers, polyurethane coatings and as polyurethane adhesives.

The present invention also provides a flame-retardant polyurethane foam obtained by reacting a polyol and an isocyanate in the presence of either at least one triphosphinate of formula (III) or a flame retardant composition of phosphinates according to the present invention, optionally further in the presence of a blowing agent, a foaming catalyst, a foam stabilizer, and/or other additives.

For the purpose of the present invention, the term "blowing agent" refers to a substance which is capable to provide gas and produce a foam of cellular structure in the polyol-isocynate reaction. Any conventional blowing agents for the production of polyurethane foams are suitable for use here, including physical blowing agents and chemical blowing agents. Examples of physical blowing agents include butane and carbon dioxide, which expand at a reduced pressure, as well as short-chain (C₅-C₆) aliphatic molecules such as pentane or cyclopentane and various hydrofluoroolefins such as 1,3,3,3-tetrafluoropropen, which are low-boiling-point liquids. Examples of chemical blowing agents include water and carboxylic acids, which release gas when reacting with isocyanate. A particular preferred blowing agent is water.

For the purpose of the present invention, suitable foaming catalyst for the production of the invented flame-retardant polyurethane foam are preferably selected from amine catalysts (e.g. tertiary amines) and organometalics (e.g. stannous octoate, stannous acetate, dibutyltin diacetate, etc.).

For the purpose of the present invention, suitable foam stabilizers for producing flame-retardant polyurethane foams may be any conventional stabilizers for controlling and stabilizing polyurethane foams. As one preferred example, said stabilizer may be selected from silicone surfactants.

For the production of a flame-retardant polyurethane foam according to the present invention, other additives may be added to the reactant mixtures, including fillers, pigments, light stabilizers, and processing aids.

The invention further relates to the use of the flame-retardant polyurethane or flame-retardant polyurethane foam as aforementioned for the manufacture of doorliners, headliners, seat covers, high-resilience foam seating, high-resilience foam mattresses rigid foam insulation panels, microcellular foam seals and gaskets, durable elastomeric wheels and tires, automotive suspension bushings, electrical potting compounds, high-performance adhesives, surface coatings and sealants, synthetic fibers, carpet underlay, hard-plastic parts and hoses.

The invention also relates to the use of the flame-retardant polyurethane or flame-retardant polyurethane foam for the manufacture of electrical switch components, components in automobile construction, electrical engineering or electronics, printed circuit boards, prepregs, potting compounds for electronic components, in boat and rotor blade construction, in outdoor GFRP applications, domestic and sanitary applications and engineering materials.

### Examples

Hereinafter, the present invention is described in more detail and specifically with reference to the Examples, which however are not intended to limit the present invention.

### Methods

High-performance liquid chromatography coupled with a mass spectrometry (HPLC-MS) was used to determine the molecular composition of the synthesized products in the Synthetic Examples.

Structural elucidation on identifying regio-isomers was performed via ¹H- and ³¹P-NMR. Separation method for individual phosphinate compounds in the product is preparative column chromatography.

### Raw materials

| | | |
|---|---|---|
| Diethylphosphinic acid (DEPS) | CAS: 813-76-3 | Mw=122.1g/mol |
| Methylethylphosphinic acid (MEPS) | CAS: 51528-32-6 | Mw=108.1g/mol |
| Glycerol, >97 wt.% | CAS: 56-81-5 | Mw= 92.1 g/mol |

### Synthetic Examples

### Generic Synthetic Procedure: {phosphinic acid + glycerol}

100 g of a phosphinic acid and [60 - 1000] g of glycerol are added in a 500 mL three-necked flask with a distillation bridge. The mixture is heated to [150-250]°C for [20-100] h while stirring and continuously removing volatiles with a gentle stream of nitrogen. While the Synthetic Examples 1-5 below used diethylphosphinic acid and methylethylphosphinic acids the only two phosphinic acids to react with glycerol, the Applicant has noted that other phosphinic acids and other alcohols are also applicable in this procedure under similar reaction conditions.

Main products of the Synthetic Examples 1, 2, 3 & 4 and their structures:
(1) DEPS-Glycerol I: isomeric mixture as identified below: 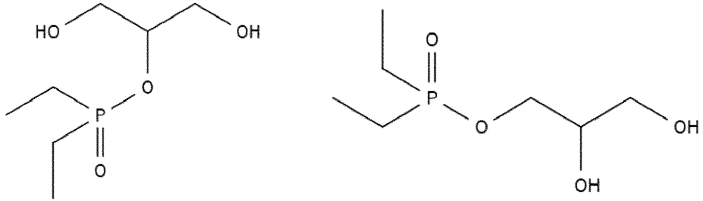
(2) DEPS-Glycerol II: isomeric mixture with main isomers identified below: 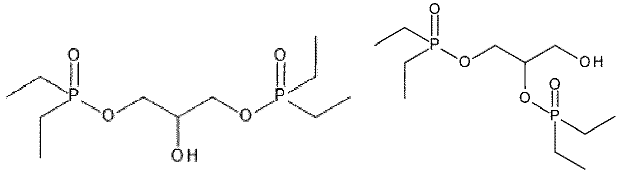
(3) DEPS-Glycerol III: Isomer identified as below:

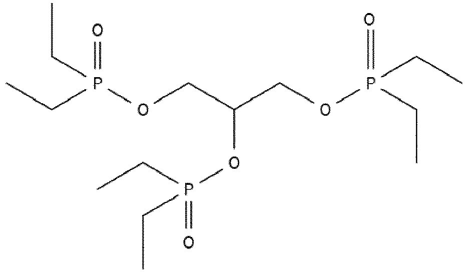

### Synthetic Example 1: FR1 {1:1 DEPS-glycerol}

91.7 g of a diethylphosphinic acid and 69.1 g of glycerol were added in a 250 mL three-necked flask with a distillation bridge. The mixture was heated to 200 °C while stirring and continuously removing volatiles with a gentle stream of nitrogen. After heating the reaction mixture for 35 h, 94 g of product were collected. The light brown viscous product was analyzed by means of HPLC-MS, which revealed the following product composition, named as FR1:

| | |
|---|---|
| DEPS-Glycerol I: | 47% |
| DEPS- Glycerol II: | 39% |
| DEPS- Glycerol III: | 14% |

The product had an acid value of < 1 mg KOH/g, an OH value of 243 mg KOH/g, and a phosphorous content of 17.9 wt %.

³¹P-NMR (DMSO-d6) analysis of the product showed multiple signals in the range of 62.4-61.4 ppm > 98 mol%.

### Synthetic Example 2: {3:1 DEPS-glycerol}

153 g of a diethylphosphinic acid and 39 g of glycerol were added in a 500 mL three-necked flask with a distillation bridge. The mixture was heated to 200 °C while stirring and continuously removing volatiles with a gentle stream of nitrogen. After heating the reaction mixture for 50 h, 94 g of product were collected. The light brown viscous product was analyzed by means of HPLC-MS, which revealed the following product composition:

| | |
|---|---|
| DEPS-Glycerol I: | 28% |
| DEPS- Glycerol II: | 46% |
| DEPS- Glycerol III: | 26% |

The product had an acid value of < 1 mg KOH/g, an OH value of 94 mg KOH/g, and a phosphorous content of 20.1 wt %.

³¹P-NMR (DMSO-d6) analysis of the product showed multiple signals in the range of 62.4-61.4 ppm > 98 mol%.

### Synthetic Example 3: {5:1 DEPS-glycerol}

95.6 g of a diethylphosphinic acid and 14.4 g of glycerol were added in a 250 mL three-necked flask with a distillation bridge. The mixture was heated to 200 °C while stirring and continuously removing volatiles with a gentle stream of nitrogen. After heating the reaction mixture for 47 h, 31 g of product were collected. The light brown viscous product was analyzed by means of HPLC-MS, which revealed the following product composition:

| | |
|---|---|
| DEPS-Glycerol I: | 11% |
| DEPS- Glycerol II: | 36% |
| DEPS- Glycerol III: | 53% |

The product had an acid value of 3.3 mg KOH/g, an OH value of 82 mg KOH/g, and a phosphorous content of 21.7 wt %.

³¹P-NMR (DMSO-d6) analysis of the product showed multiple signals in the range of 62.4-61.4 ppm > 98 mol%.

### Synthetic Example 4: FR2 {3:1 DEPS-glycerol}

1473 g of a diethylphosphinic acid and 369 g of glycerol were added in a 2000 mL three-necked flask with a distillation bridge. The mixture was heated to 190 °C while stirring and continuously removing volatiles with a gentle stream of nitrogen. After heating the reaction mixture until completion of reaction, 692 g of product were collected. The light brown viscous product was analyzed by means of GC-MS, which revealed the following product composition, named as FR2:

| | |
|---|---|
| DEPS-Glycerol I: | 1.55% |
| DEPS- Glycerol II: | 35.47% |
| DEPS- Glycerol III: | 62.53% |

The product had an acid value of 0.5 mg KOH/g, an OH value of 94 mg KOH/g, and a phosphorous content of 19.6 wt %.

31P-NMR (DMSO-d6) analysis of the product showed multiple signals in the range of 62.4-61.4 ppm of 98.7mol%.

### Main products of Synthetic Example 5 and their structures:

(1) MEPS-Glycerol I: Isomeric mixture as identified below: 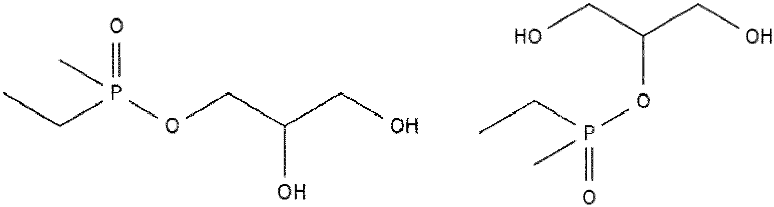
(2) MEPS-Glycerol II: Isomeric mixture with main isomers identified below 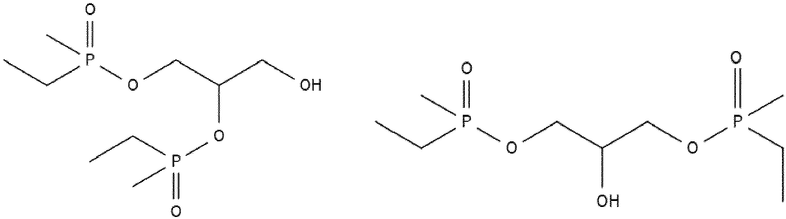
(3) MEPS-Glycerol III: Racemic stereoisomeric mixture as below:

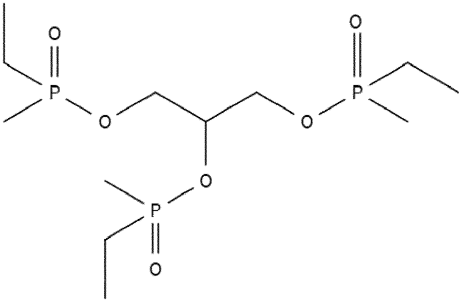

### Synthetic Example 5: FR3 {3:1 MEPS-glycerol}

200 g of a methylethylphosphinic acid and 57 g of glycerol were added in a 500 mL three-necked flask with a distillation bridge. The mixture was heated to 190 °C while stirring and continuously removing volatiles with a gentle stream of nitrogen. After heating the reaction mixture for 51 h, 98 g of product were collected. The light brown viscous product was analyzed by means of HPLC-MS, which revealed the following product composition, named as FR3:

| | |
|---|---|
| MEPS-Glycerol I: | 31.4% |
| MEPS- Glycerol II: | 32.8 % |
| MEPS- Glycerol III: | 35.8% |

The product had an acid value of 3.5 mg KOH/g, an OH value of 92 mg KOH/g, and a phosphorous content of 21.9 wt %.

31P-NMR (DMSO-d6) analysis of the product showed multiple signals in the range of 62.3-61.5 ppm > 95 mol%.

### Application Examples

### 1. Components used:

### Flame Retardant:

FR-1: product of Synthetic Example 1
FR-2: product of Synthetic Example 4
FR-3: product of Synthetic Example 5
Ref-1: Fyrol^{®} PCF from ICL Industrial Products, TCPP (tris (1-chloro-2-propyl) phosphate), a halogenated phosphate ester.
Ref-2: Exolit^{®} OP 550 from Clariant International Ltd, a non-halogenated, polymeric phosphorus polyol specifically designed for flexible polyurethane foams, which is a phosphate ester with hydroxyalkyl groups.
Ref-3: Exolit^{®} OP 560 from Clariant International Ltd., a non-halogenated polymeric phosphorous polyol specifically designed for flexible polyurethane foams, which is a phosphonate ester with hydroxyalkyl groups.

### Polyol:

Polyether polyol (P1): Arcol^{®} 1104 or 1108 from Covestro AG, a medium molecular weight polyoxypropylene triol with an OH number of 56 mg KOH/g
Polyester polyol (P2): Desmophen^{®} 60WB01 from Covestro AG, a partly branched polyester polyol based on adipic acid, diethylene glycol and trimethylol propane, with an OH number of 60 mg KOH/g

### Polymerization Catalyst:

| | |
|---|---|
| Cat 1: | Kosmos^{®} EF from Evonik Industries, a stannous catalyst |
| Cat 2: | Kosmos^{®} 29 from Evonik Industries, a stannous octoate catalyst |
| Cat 3: | Niax^{®} A1 from Momentive Performance Materials Inc., an amine catalyst based on bis(2-dimethylaminoethyl)ether |
| Cat 4: | Tegoamin^{®} 33 from Evonik Industries, an amine catalyst based on triethylenediamine |
| Cat 5: | JEFFCAT^{®} ZF-10 from Huntsman, an amine catalyst based on N,N,N'-trimethyl-N'-hydroxyethylbisaminoethylether |
| Cat 6: | Tegoamin^{®} E10 from Evonik Industries, an amine catalyst based on 1,4-dimethylpiperazine |
| Cat 7: | Niax^{®} A30 from Momentive Performance Materials Inc., an amine catalyst based on bis(2-dimethylaminoethyl) ether |

### Foam Stabilizer:

| | |
|---|---|
| S1: | Tegostab^{®} B 8232 from Evonik Industries, a silicone surfactant |
| S2: | Tegostab^{®} B 8244 from Evonik Industries, a silicone surfactant |
| S3: | Tegostab^{®} B 8235 from Evonik Industries, a silicone surfactant |

### TDI (tolyl diisocyanate):

| | |
|---|---|
| T80: | Desmodur^{®} T80 from Covestro AG, 2,4- and 2,6-toluene diisocyanate, 80/20 mixture of isomers |
| T65: | Desmodur^{®} T65 from Covestro AG, 2,4- and 2,6-toluene diisocyanate, 65/35 mixture of isomers |

### 2. Hydrolytic Stability Test

Hydrolytic stability of different flame retardants was determined by measuring the acid value of blends made of polyol, flame retardant and water over time and during storage at an elevated temperature. For this purpose, 90 g of polyol, 9 g of flame retardant (10 wt.-%) and 4.5 g of water (5 wt.-%) were homogenized by stirring at 1500 rpm for 2 minutes. The acid value was then determined using a 3:1 (v/v) isopropanol / water mixture as solvent and 0.1 N NaOH (aq.) solution as titration agent. The samples were then stored at 40°C and the acid values determined after 11, 17 and 28 days. Samples were homogenized before analysis by stirring at 1500 rpm for 2 minutes. The acid value development of polyol-water blends without flame retardant addition was also determined after 11 and 28 days, respectively, as shown in the table below.

**Table 1: Hydrolytic stability test: Evolution of the acid value of mixtures of polyols with 10 %(m/m) of flame retardant and 5 %(m/m) of water during storage at 40°C.**

| | Polyol | Flame retardant | Acid value (mg KOH/g) | | |
|---|---|---|---|---|---|
| | | | 11 d | 17 d | 28 d |
| Polyether blend | P1 | - | 0 | - | 0.1 |
| | P1 | FR-1 | 0.1 | 0.1 | 0.1 |
| | P1 | FR-2 | 0.1 | 0.1 | 0.1 |
| | P1 | Ref-2 | 42.8 | 45.7 | 47.2 |
| | P1 | Ref-3 | 16.4 | 16.5 | 16.6 |
| Polyester blend | P2 | - | 1.3 | -- | 1.9 |
| | P2 | FR-1 | 1.3 | 1.5 | 1.9 |
| | P2 | FR-2 | 1.3 | 1.5 | 2.0 |
| | P2 | Ref-2 | 89.8 | 93.0 | 94.7 |
| | P2 | Ref-3 | 71.9 | 81.1 | 84.1 |

Regardless of the polyol type and compared to the flame-retardant-free reference, the inventive examples FR-1 and FR-2 did not cause a notable increase of acid value in their polyol blends, during and after the entire 28 days of storage under 40°C. This indicates a high hydrolytic stability of FR-1 and FR-2 during storage in the polyol blend, namely zero to negligible hydrolysis of the FR-1 and FR-2. In comparison, for both polyol types, the acid value of polyol blends containing a phosphate Ref-2 or a phosphonate Ref-3 significantly increased after merely 11 days under the same storage condition, which can only be explained by hydrolysis of Ref-2 or Ref-3, respectively.

### 3. Flexible polyurethane (PUR) foam formulations with performance testing

Stannous catalysts, polyol, flame retardant, water, foam stabilizer and amine catalysts were weighed into a dry beaker in that order and premixed for 60 seconds at 500 rpm (for polyether polyol formulations) or 1000 rpm (for polyester polyol formulations), respectively. After addition of TDI, the mixtures were stirred at 2500 rpm for 7 seconds. The resulting mass was rapidly poured into a paper-lined box mold (25*26*26 cm). Rise time and further observations were noted during the foaming process. The foams were cured at room temperature for approximately 16 hours before cutting and collected in each comparative (C1-C6) or inventive (11-14) example for further evaluation.

The selection of polymerization catalyst, foam stabilizer and TDI in each foam example was made based on existing empirical guidance for optimal foamability in each case, with details listed below in Table 2.

**Table 2: Polyol, Flame Retardant, Catalyst, Foam Stabilizer and TDI used in each foam example**

| Component | Example | | | | | | | | | |
|---|---|---|---|---|---|---|---|---|---|---|
| | C1 | C2 | C3 | C4 | C5 | C6 | I1 | I2 | I3 | I4 |
| Polyol | P1 | P1 | P1 | P1 | P2 | P2 | P1 | P1 | P1 | P2 |
| Flame Retardant | 0 | Ref-1 | Ref-1 | Ref-2 | 0 | Ref-1 | FR-1 | FR-2 | FR-3 | FR-1 |
| Polymerization | Cat 2 | Cat 2 | Cat 2 | Cat 2 | Cat 6 | Cat 6 | Cat 1 | Cat 1 | Cat 1 | Cat 1 |
| Catalyst | Cat 3 | Cat 3 | Cat 3 | Cat 3 | Cat 7 | Cat 7 | | Cat 5 | Cat 5 | Cat 6 |
| (weight ratio) | Cat 4 | Cat 4 | Cat 4 | Cat 4 | (3:2) | (1:1) | | (3:2) | (3:2) | Cat 7 |
| | (3:2:4) | (2:1:2) | (1.3:1:2) | (3:2:4) | | | | | | (2:5:8) |
| Foam Stabilizer | S1 | S1 | S1 | S1 | S3 | S3 | S2 | S1 | S1 | S3 |
| TDI (weight ratio) | T80 | T80 | T80 | T80 | T80 | T80 | T80 | T80 | T80 | T65 |

Each of the PUR foam example was then evaluated for flame retardancy and emission performance, as explained below.

### Evaluation of flame retardancy

The efficiency of the flame retardants was evaluated by testing the burning behavior of flexible polyurethane foam samples with a target density of 30 kg/m³, containing the flame retardants in the horizontal burn test, as described in the Federal Motor Vehicle Safety Standard 302 (FMVSS 302). According to this standard, samples are given the highest classification (SE, "self-extinguishing") if the flame does not travel beyond a 38 mm mark on the specimen but extinguishes within this distance. Lower classifications include SE/NBR (self-extinguishing/no burn rate), SE/B (self-extinguishing/burn rate) and B (burn rate). Five sample specimens were cut from each foam and submitted to the test. The lowest-rated specimen determined the overall classification for the foam.

### Evaluation of emission performance

Low emissions from materials are particularly important in interior automotive applications. They can be classified into two types: semi-volatile condensable emissions (FOG) and volatile organic compounds (VOC). The name FOG emissions stems from the fogging effect they can have on cold surfaces such as car windshields. They can be quantified according to DIN 75201 B: A sample is heated to 100°C for 16 h in a specialized device, while semi-volatile components of the emissions are condensed on a cooled surface and quantified gravimetrically. VOC emissions can be quantified by thermodesorption analysis according to the automotive standard VDA 278. A sample in a thermodesorption tube is heated to 90°C for 30 min, and condensates are collected in a cooling trap before being identified and quantified via GC/MS against an external standard like toluene. The emission performance of the new flame retardant described herein was evaluated by determining both FOG and VOC emissions according to these procedures.

The flame retardancy and emission performance of tested foam examples are compared below, separately listed by the polyol type in the foam.

**Table 3: Performance data of flexible polyurethane polyether (P1) foam formulations**

| Component* | Example | | | | | | |
|---|---|---|---|---|---|---|---|
| | C1 | C2 | C3 | C4 | I1 | I2 | I3 |
| P1 | 100 | 100 | 100 | 100 | 100 | 100 | 100 |
| Ref-1 | 0 | 12 | 8 | 0 | 0 | 0 | 0 |
| Ref-2 | 0 | 0 | 0 | 4 | 0 | 0 | 0 |
| FR-1 | 0 | 0 | 0 | 0 | 4 | 0 | 0 |
| FR-2 | 0 | 0 | 0 | 0 | 0 | 4 | 0 |
| FR-3 | 0 | 0 | 0 | 0 | 0 | 0 | 4 |
| Catalyst | 0.45 | 0.50 | 0.43 | 0.45 | 0.17 | 0.5 | 0.5 |
| Water | 3.5 | 4.0 | 3.2 | 3.5 | 3.3 | 3.3 | 3.3 |
| Foam Stabilizer | 1.3 | 1.3 | 1.3 | 1.3 | 1.3 | 0.7 | 0.7 |
| TDI | 43.7 | 48.4 | 40.3 | 44.5 | 44.9 | 45.0 | 44.9 |
| Density [kg/m³] | 32.1 | 29.8 | 32.5 | 29.8 | 29.3 | 29.7 | 30.3 |
| FMVSS 302 rating | B | SE | SE/NBR | SE | SE | SE | SE |
| Fogging [mg/g] | n.d.^{†} | 26.2 | n.d. | 2.0 | 0.3 | 0.3 | 0.3 |
| VDA 278 [ppm] | n.d. | 5787 | n.d. | 547 | 62 | 94 | 105 |

| | | | | | | | |
|---|---|---|---|---|---|---|---|
| **Amounts of all components are given in parts per 100 parts of polyol (php).* *^{†}Not determined for foams having inferior FMVSS 302 rating* | | | | | | | |

As shown in the performance data listed in Table 3, comparative example C1 (polyether polyurethane foam without flame retardant additive) does not meet the required flame retardancy standard. With 12 php of halogenated reference flame retardant TCPP (Ref-1), the comparative example C2 provides a polyether polyurethane foam which meets required flame retardancy standards but shows very bad emission properties, as reflected in the associated fogging and VDA 278 parameters. In an attempt to reduce undesired emission in TCPP-incorporated PUR foam samples, comparative example C3 has reduced the TCPP content to 8 php but failed to achieve the required flame retardancy rating.

Comparative example C4 is a polyether polyurethane foam with 4 php of non-halogenated reference flame retardant Exolit^{®} OP 550 (Ref-2), which meets required flame retardancy standards, gives lower semi-volatile condensable emissions (i.e. fogging) compared to C2 but still higher VOC (i.e. VDA 278) than desired.

The inventive example I1, a polyether polyurethane foam with 4 php of non-halogenated inventive flame retardant (FR-1), not only meets required flame retardancy standards but also features least emission in both semi-volatile condensable emissions and VOC measurements.

The inventive example I2, a polyether polyurethane foam with 4 php of non-halogenated inventive flame retardant (FR-2), is equally excellent as I1, in flame retardancy rating and emission properties.

The inventive example I3, a polyether polyurethane foam with 4 php of non-halogenated inventive flame retardant (FR-3), is equally excellent as I1 and I2, in flame retardancy rating and emission properties.

**Table 4: Performance data of flexible polyurethane polyester (P2) foam formulations**

| Component | Example | | |
|---|---|---|---|
| | C5 | C6 | I4 |
| P2 | 100 | 100 | 100 |
| Ref-1 | 0 | 8 | 0 |
| FR-1 | 0 | 0 | 6.5 |
| Catalyst | 1.0 | 0.80 | 0.75 |
| Water | 4.0 | 4.0 | 4.1 |
| Stab | 1.2 | 1.2 | 1.2 |
| TDI | 55.4 | 49.9 | 49.6 |
| Density [kg/m³] | 30.0 | 32.0 | 31.2 |
| FMVSS 302 rating | B | SE | SE |
| Fogging [mg/g] | n.d. | 4.5 | 0.3 |
| VDA 278 [ppm] | n.d. | 3049 | 165 |

As shown in the performance data listed in Table 4, comparative example C5 (polyurethane polyester foam) without flame retardant does not meet the required flame retardancy standard.

With 8 php of halogenated reference flame retardant TCPP (Ref-1), the comparative example C6 provides a polyurethane polyester foam which meets required flame retardancy standards but shows very bad emission properties, as reflected in the associated fogging data and especially the VDA 278 measurement.

Advantageously, the inventive example I4, a polyurethane polyester foam with 6.5 php of non-halogenated inventive flame retardant (FR-1), not only meets required flame retardancy standards but also gives the minimal quantity in both semi-volatile condensable emissions and VOC measurements.

Summarizing from these experimental data, the technical benefits of the inventive phosphinate flame retardants are not limited to the hydrolytic stability, compatibility with polyol system for polymer processing, but also extended to providing flame-retardant PUR foams with excellent flame retardancy and minimal emission upon use. It was further noted that, the inventive flame retardants FR-1, FR-2 and FR-3 showed excellent compatibility with each polyol tested and stayed in solution in liquid form on the shelf over 28 days.

## Claims

1. A triphosphinate compound of formula (III) 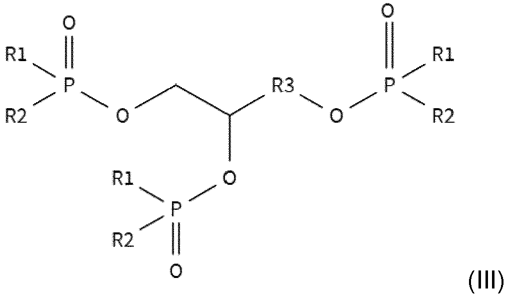 wherein
R1 and R2 are the same or different and independently represent H or a C₁-C₁₀ alkyl, with the proviso that R1 and R2 may not each be H simultaneously, and wherein
R3 is a C₁-C₈ alkylenyl group which is optionally substituted with a heteroatom selected from O, N and S.

2. The triphosphinate compound of claim 1, wherein R1 and R2 are each independently selected from C₁-C₆ alkyl, preferably selected from C₁-C₄ alkyl.

3. The triphosphinate compound of claim 2, wherein R1 and R2 are both ethyl.

4. The triphosphinate compound of claim 2, wherein one of R1 and R2 is ethyl and the other is methyl.

5. The triphosphinate compound of any one of claims 1-4, wherein R3 is selected from the group consisting of unsubstituted alkylenyl groups and oxyalkylenyl groups.

6. The triphosphinate compound of claim 5, wherein R3 is methylene.

7. A flame retardant composition comprising 10 wt% to 98 wt%, preferably 10 wt% to 65 wt% of a triphosphinate compound according to any one of claims 1-6, the percentage being based on the total weight of the composition.

8. A flame retardant composition according to claim 7, further comprising at least one phosphinate compound selected from compounds of formulae (IA), (IB), (IIA), and (IIB):

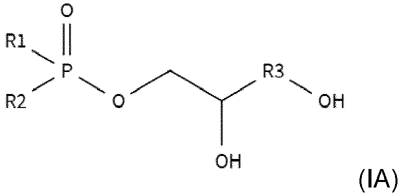

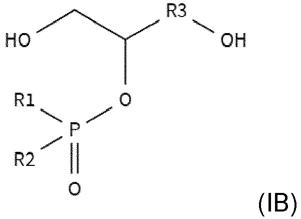

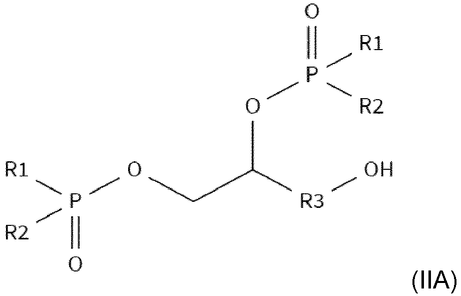

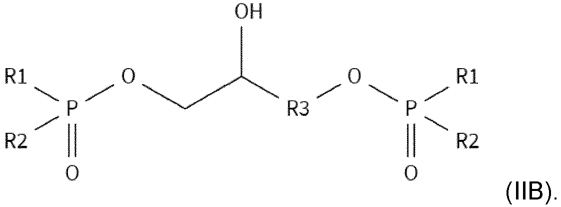

9. A flame retardant composition according to claim 8, wherein the phosphinate compounds of formulae (IA) and (IB) are each present in an amount ranging from 10 wt% to 60 wt%, the phosphinate compounds of formulae (IIA) and (IIB) are each present in an amount ranging from 10 wt% to 60 wt%, and a triphosphinate compound according to any one of claims 1-6 is present in an amount ranging from 10 wt% to 65 wt%, all weight percentages being based on the total weight of the composition.

10. A flame retardant composition according to any one of claims 7-9, wherein R1 and R2 are both ethyl, and wherein R3 is methylene.

11. A flame retardant composition according to any one of claim 7-9, wherein one of R1 and R2 is ethyl and the other is methyl, and wherein R3 is methylene.

12. A flame-retardant polyurethane obtained by reacting a polyol and an isocyanate in the presence of either at least one triphosphinate of any one of claims 1-6 or a flame retardant composition according to any one of claims 7-11.

13. A flame-retardant polyurethane foam obtained by reacting a polyol and an isocyanate in the presence of either at least one triphosphinate of any one of claims 1-6 or a flame retardant composition according to any one of claims 7-11, optionally in the presence of a polymerization catalyst.

14. A process for the preparation of a triphosphinate compound or a composition of phosphinate compounds, comprising the reaction of at least one phosphinic acid of formula (I) with a triol of formula (II): 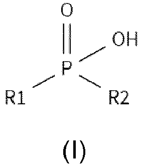 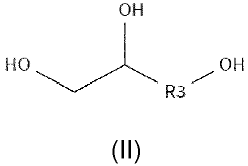 wherein
R1 and R2 are the same or different and independently represent H or a C₁-C₁₀ alkyl, with the proviso that R1 and R2 may not each be H simultaneously, and wherein
R3 is a C1-C8 alkylenyl group which is optionally substituted with a heteroatom selected from O, N and S.

15. The process of claim 14, wherein the molar ratio of the phosphinic acid of formula (I) and the triol of formula (II) in the reaction is from 5:1 to 1:5, preferably from 3:1 to 1:2.
